(19) Europäisches Patentamt
European Patent Office
Office européen des brevets

(11) **EP 3 489 136 B1**

(12) **FASCICULE DE BREVET EUROPEEN**

(45) Date de publication et mention
de la délivrance du brevet:
**04.03.2020 Bulletin 2020/10**

(51) Int Cl.:
***B64C 13/50*** *(2006.01)* ***B64C 9/16*** *(2006.01)*

(21) Numéro de dépôt: **18206397.4**

(22) Date de dépôt: **15.11.2018**

(54) **PROCÉDÉ ET SYSTÈME D'ESTIMATION DE LA POSITION DE VOLETS D'UN AÉRONEF**

VERFAHREN UND SYSTEM ZUR POSITIONSABSCHÄTZUNG DER KLAPPEN EINES FLUGZEUGS

METHOD AND SYSTEM FOR ESTIMATING THE POSITION OF THE FLAPS OF AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.11.2017 FR 1761210**

(43) Date de publication de la demande:
**29.05.2019 Bulletin 2019/22**

(73) Titulaire: **Airbus Operations (S.A.S.)
31060 Toulouse (FR)**

(72) Inventeurs:
• **SEMAT, Maxime
31200 Toulouse (FR)**
• **ANDISSAC, David
31500 Toulouse (FR)**

(74) Mandataire: **Sarraméa, Claude
Airbus Operations (S.A.S)
XIF - M0101/1
316, route de Bayonne
31060 Toulouse Cedex (FR)**

(56) Documents cités:
**US-A- 6 073 084 US-A1- 2010 100 260**

**Description**

DOMAINE TECHNIQUE

La présente invention concerne le domaine des commandes de vol d'un aéronef. Elle traite notamment de l'estimation de la position des volets d'un aéronef.

ÉTAT DE LA TECHNIQUE

Lors des phases de décollage et d'atterrissage d'un aéronef, les becs (« slats » en anglais) et les volets (« flaps » en anglais) qui sont montés sur les ailes de l'aéronef sont sortis afin d'augmenter le coefficient de portance de l'aéronef et de voler à une vitesse plus petite qu'à une vitesse pour laquelle les becs et les volets ne sont pas sortis.

Généralement, la position des becs et des volets est commandée par des ordinateurs de commande des becs et des volets (SFCC pour « Slats and Flaps Control Computer » en anglais) qui émettent des commandes de position en fonction de la position d'un levier de commande de configuration dans la cabine de pilotage. Le levier de commande de configuration permet de commander les positions des becs et des volets selon différentes configurations.

La position, commandée par les ordinateurs de commande SFCC, est mesurée à l'aide de capteurs dédiés. Par exemple, parmi ces capteurs, il existe l'unité de capteur de position asymétrique (APPU pour « Asymmetric Position Pick-off Unit » en anglais), l'unité de capteur de position indiqué (IPPU pour « Indicated Position Pick-off Unit » en anglais) et l'unité de capteur de position de secours (FPPU pour « Feedback Position Pick-Off Unit » en anglais).

La perte des mesures de position des becs et des volets peut générer une dégradation du fonctionnement du pilote automatique (« autopilot » en anglais) et du directeur de vol (« flight director » en anglais) et/ou une dégradation des lois de pilotage.

Pour le cas des volets, la perte de leur mesure peut avoir lieu en cas de défaillance de l'unité FPPU, en cas de défaillance d'une boîte de vitesse différentielle utilisée par l'unité IPPU ou en cas de défaillance du ou des ordinateurs de commande SFCC.

En cas de perte des mesures de la position des becs et des volets, l'aéronef peut se présenter dans une configuration par défaut qui dépend de la position des trains d'atterrissage (« landing gears » en anglais) et non de la position des becs et des volets. Par exemple, si les trains d'atterrissage sont sortis, on considère que l'aéronef se présente dans une configuration dite « FULL ». Si les trains d'atterrissage sont entrés, on considère que l'aéronef se présente dans une configuration dite « CLEAN ».

Toutefois, une estimation de la position précise des volets permettrait une amélioration du fonctionnement du pilote automatique ou du fonctionnement selon la loi normale de pilotage en cas de perte de mesure de la position des volets.

Le document US6073084A décrit un procédé dans un aéronef, ce procédé comprenant une étape de mesure d'un angle d'attaque courant de l'aéronef et de paramètres de vol courant de l'aéronef. Le procédé comprend également une étape d'estimation d'un coefficient de portance courant de l'aéronef à partir des paramètres de vol courants et d'une masse de l'aéronef. Toutefois, ce document n'enseigne aucune solution à la perte de mesure de la position des volets.

EXPOSÉ DE L'INVENTION

La présente invention a pour objet de pallier ces inconvénients en proposant un procédé et un système permettant d'estimer en temps réel la position des volets et de déduire, à partir de la position estimée des volets, la configuration dans laquelle l'aéronef se présente en cas de perte des mesures de la position des volets et des becs.

A cet effet, l'invention concerne un procédé d'estimation d'une position de volets d'un aéronef.

Selon l'invention, le procédé d'estimation comprend :

- une étape de mesure, mise en œuvre par un module de mesure, consistant à mesurer un angle d'attaque courant de l'aéronef et des paramètres de vol courants de l'aéronef ;
- une première étape d'estimation, mise en œuvre par un premier module d'estimation, consistant à estimer un coefficient de portance courant de l'aéronef à partir des paramètres de vol courants et d'une masse (m) de l'aéronef ;
- une deuxième étape d'estimation, mise en œuvre par un deuxième module d'estimation, consistant à estimer un angle d'attaque pour une portance nulle à partir de l'angle d'attaque courant, à partir du coefficient de portance courant estimé dans la première étape d'estimation et à partir d'une pente d'une partie affine d'au moins une courbe théorique décrivant un coefficient de portance de l'aéronef en fonction d'un angle d'attaque ;
- une troisième étape d'estimation, mise en œuvre par un troisième module d'estimation, consistant à estimer une position courante des volets de l'aéronef à partir de l'angle d'attaque pour une portance nulle, estimé dans la deuxième étape d'estimation ;

- une étape d'envoi, mise en œuvre par un module d'envoi, consistant à envoyer la position courante des volets à un dispositif utilisateur.

Ainsi, grâce à l'invention, il est possible d'estimer la position courante des volets à partir de l'angle d'attaque courant et de paramètres de vol courants ; ce qui permet une amélioration du fonctionnement du pilote automatique ou du fonctionnement selon la loi normale de pilotage lors d'une perte des mesures de position des volets.

En outre, l'étape de mesure comprend :

- une première sous-étape de mesure, mise en œuvre par un premier sous-module de mesure, consistant à mesurer une composante verticale d'un facteur de charge courant de l'aéronef ;
- une deuxième sous-étape de mesure, mise en œuvre par un deuxième sous-module de mesure, consistant à mesurer une pression statique courante ;
- une troisième sous-étape de mesure, mise en œuvre par un troisième sous-module de mesure, consistant à mesurer un nombre de Mach courant de l'aéronef ;
- une quatrième sous-étape de mesure, mise en œuvre par un quatrième sous-module de mesure, consistant à mesurer l'angle d'attaque courant de l'aéronef.

De plus, la première étape d'estimation consiste à estimer le coefficient de portance courant de l'aéronef à partir de l'expression suivante : $C_z = \frac{2n_z mg}{\gamma P_s M^2 S}$, dans laquelle :

- $n_z$ correspond à la composante verticale d'un facteur de charge courant de l'aéronef,
- $m$ correspond à la masse courante de l'aéronef,
- $g$ correspond à l'accélération de la pesanteur,
- $\gamma$ correspond au coefficient adiabatique pour l'air,
- $P_s$ correspond à la pression statique courante,
- $M$ correspond au nombre de Mach courant de l'aéronef,
- $S$ correspond à une surface de référence d'ailes de l'aéronef.

Dans un mode particulier de réalisation, la pente utilisée dans la deuxième étape d'estimation correspond à une moyenne de pentes, chacune des pentes correspondant à une pente de la partie affine de chacune des courbes théoriques décrivant un coefficient de portance de l'aéronef en fonction d'un angle d'attaque.

Selon une particularité, chacune des courbes théoriques est définie pour une configuration possible dans laquelle se présente l'aéronef.

Selon une autre particularité, le procédé comprend une étape de détermination, mise en œuvre par un module de détermination, consistant à déterminer la ou les courbes théoriques, chacune des courbes théoriques étant déterminée pour une configuration de l'aéronef.

De plus, la troisième étape d'estimation consiste également à estimer la ou les configurations courantes dans laquelle se présente l'aéronef à partir de la position courante estimée des volets de l'aéronef.

L'invention concerne également un système d'estimation d'une position de volets d'un aéronef.

Selon l'invention, le système d'estimation comprend :

- un module de mesure configuré pour mesurer un angle d'attaque courant de l'aéronef et des paramètres de vol courants de l'aéronef ;
- un premier module d'estimation configuré pour estimer un coefficient de portance courant de l'aéronef à partir des paramètres de vol courants et d'une masse de l'aéronef ;
- un deuxième module d'estimation configuré pour estimer un angle d'attaque pour une portance nulle à partir de l'angle d'attaque courant, du coefficient de portance courant estimé par le premier module d'estimation et à partir d'une pente d'une partie affine d'au moins une courbe théorique décrivant un coefficient de portance de l'aéronef en fonction d'un angle d'attaque ;
- un troisième module d'estimation configuré pour estimer une position courante des volets de l'aéronef à partir de l'angle d'attaque pour une portance nulle estimé par le deuxième module d'estimation ;
- un module d'envoi configuré pour envoyer la position courante des volets à un dispositif utilisateur.

En outre, le module de mesure comprend :

- un premier sous-module de mesure configuré pour mesurer une composante verticale d'un facteur de charge courant de l'aéronef ;
- un deuxième sous-module de mesure configuré pour mesurer une pression statique courante ;
- un troisième sous-module de mesure configuré pour mesurer un nombre de Mach courant de l'aéronef ;
- un quatrième sous-module de mesure configuré pour mesurer l'angle d'attaque courant de l'aéronef.

De plus, le système comprend un module de détermination configuré pour déterminer la ou les courbes théoriques, chacune des courbes théoriques étant déterminée pour une configuration de l'aéronef.

L'invention concerne également un aéronef, en particulier un avion de transport, comportant un système d'estimation de la position des volets d'un aéronef, tel que décrit ci-dessus.

BRÈVE DESCRIPTION DES FIGURES

L'invention, avec ses caractéristiques et avantages, ressortira plus clairement à la lecture de la description faite en référence aux dessins annexés dans lesquels :

- la figure 1 représente schématiquement le système d'estimation de la position des volets,
- la figure 2 représente schématiquement le procédé d'estimation de la position des volets,
- la figure 3 représente une courbe théorique décrivant un coefficient de portance en fonction d'un angle d'attaque,
- la figure 4 représente une modification de la courbe théorique de la figure 3 causée par une extension des becs,
- la figure 5 représente une modification de la courbe théorique de la figure 3 causée par une extension des volets,
- la figure 6 représente une vue de profil d'un aéronef présentant des volets et des becs,
- la figure 7 représente des courbes théoriques décrivant un coefficient de portance en fonction d'un angle d'attaque pour plusieurs configurations de l'aéronef.

DESCRIPTION DÉTAILLÉE

L'invention concerne un système d'estimation 1 de la position de volets 7 d'un aéronef AC et un procédé d'estimation de la position de volets 7 d'un aéronef AC. Dans la suite de la description, le système d'estimation 1 de volets 7 d'un aéronef AC est appelé le système d'estimation 1. De même, le procédé d'estimation de la position de volets 7 d'un aéronef AC est appelé procédé d'estimation.

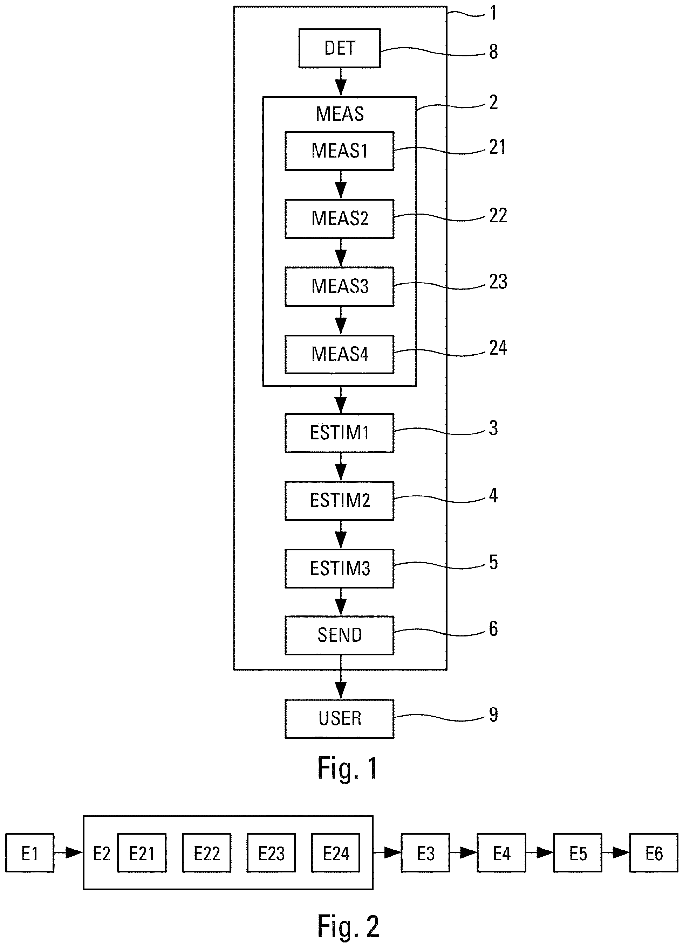

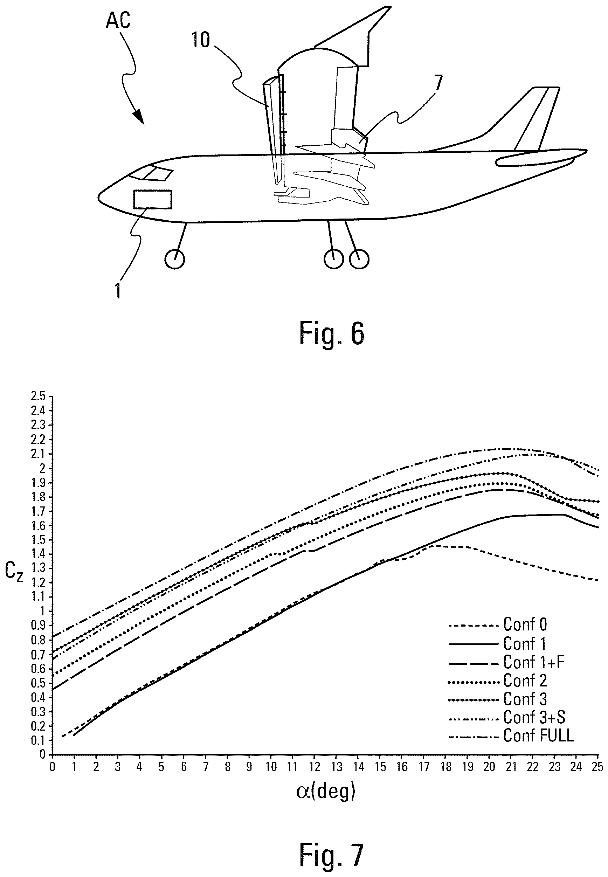

La figure 1 représente un mode de réalisation du système d'estimation 1 qui peut être embarqué sur un aéronef AC (figure 6).

Le système d'estimation 1 comprend un module de mesure MEAS (MEAS pour « measuring module » en anglais) 2 configuré pour mesurer un angle d'attaque courant a de l'aéronef AC et des paramètres de vol courants de l'aéronef AC.

Selon un mode de réalisation, le module de mesure 2 comprend :

- un sous-module de mesure MEAS1 21 configuré pour mesurer une composante verticale d'un facteur de charge courant $n_z$ de l'aéronef AC ;
- un sous-module de mesure MEAS2 22 configuré pour mesurer une pression statique courante $P_s$ ;
- un sous-module de mesure MEAS3 23 configuré pour mesurer un nombre de Mach courant $M$ de l'aéronef AC ;
- un sous-module de mesure MEAS4 24 configuré pour mesurer l'angle d'attaque courant $\alpha$ de l'aéronef AC.

Le sous-module de mesure 21 peut comprendre une centrale inertielle permettant de déterminer la composante verticale du facteur de charge courant $n_z$ de l'aéronef AC.

Le sous-module de mesure 22 peut comprendre un capteur de pression statique permettant de mesurer la pression statique courante $P_s$.

Le sous-module de mesure 23 peut comprendre un machmètre permettant de déterminer le nombre de Mach $M$. De façon usuelle, le nombre de Mach $M$ peut être déterminé à partir de la pression statique courante $P_s$ mesurée par le capteur de pression statique et de la pression totale courante mesurée par un capteur de pression totale.

Le sous-module de mesure 24 peut comprendre un incidencemètre permettant de déterminer l'angle d'incidence.

Le système d'estimation comprend également un module d'estimation ESTIM1 (ESTIM pour « estimating module » en anglais) 3 configuré pour estimer un coefficient de portance courant $C_z$ de l'aéronef AC à partir des paramètres de vol courant et d'une masse m de l'aéronef AC.

Selon le mode de réalisation cité ci-dessus, les paramètres de vol comprennent au moins le facteur de charge courant $n_z$ de l'aéronef AC, la pression statique courante $P_s$, le nombre de Mach courant $M$ de l'aéronef AC.

Le coefficient de portance courant $C_z$ de l'aéronef AC peut être estimé à partir de l'expression suivante :

$$C_z = \frac{2n_z mg}{\gamma P_s M^2 S}, \quad \text{dans laquelle :}$$

- $n_z$ correspond à la composante verticale du facteur de charge courant de l'aéronef AC (sans unité),
- $m$ correspond à la masse courante de l'aéronef AC (en kilogrammes),
- $g$ correspond à l'accélération de la pesanteur (constante égale à 9,81 m.s$^{-2}$),
- $\gamma$ correspond au coefficient adiabatique pour l'air (constante sans unité égale à 1,4),
- $P_s$ correspond à la pression statique courante (en Pascals),
- $M$ correspond au nombre de Mach courant de l'aéronef AC (sans unité),
- $S$ correspond à une surface de référence d'ailes de l'aéronef AC (constante en mètres carrés).

La valeur de la constante de la surface de référence d'ailes $S$ dépend du type d'aéronef.

Le système d'estimation 1 comprend également un module d'estimation ESTIM2 4 configuré pour estimer un angle d'attaque $\alpha_0$ pour une portance nulle à partir de l'angle d'attaque courant $\alpha$, à partir du coefficient de portance courant $C_z$ estimé par le premier module d'estimation 3 et à partir d'une pente $C_{z\alpha}$ d'une partie affine d'au moins une courbe théorique $C_z(\alpha)$ décrivant un coefficient de portance de l'aéronef AC en fonction d'un angle d'attaque.

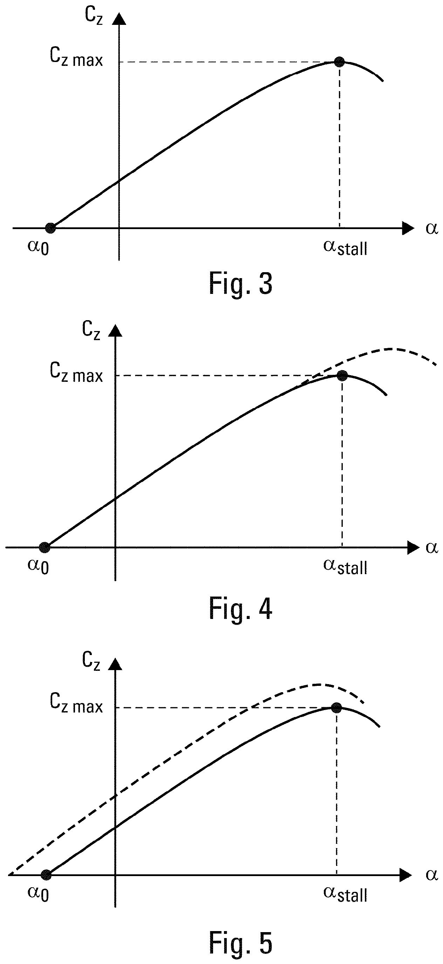

La figure 3 représente une courbe théorique $C_z(\alpha)$ décrivant le coefficient de portance $C_z$ en fonction de l'angle d'attaque $\alpha$. Le coefficient de portance $C_z$ croît linéairement avec l'angle d'attaque $\alpha$ jusqu'à un angle d'attaque de décrochage $\alpha_{stall}$ (« stall angle of attack » en anglais) soit atteint. La partie affine de la courbe théorique $C_z(\alpha)$ correspond à la partie de la courbe pour laquelle le coefficient de portance $C_z$ croît linéairement avec l'angle d'attaque $\alpha$. La figure 4 représente l'effet de l'extension des becs 10. Le trait en pointillés illustre la modification de la courbe théorique $C_z(\alpha)$ lorsque les becs 10 sont étendus. Cette figure 4 montre que la partie affine est étendue et que la pente $C_{z\alpha}$ de la partie affine n'est pas modifiée.

La figure 5 représente l'effet de l'extension des volets 7. Le trait en pointillés illustre la modification de la courbe théorique $C_z(\alpha)$ lorsque les volets 7 sont étendus. Cette figure 5 montre que la pente $C_{z\alpha}$ de la partie affine n'est pas modifiée non plus.

Ainsi, quelles que soient les positions des becs 10 et des volets 7, la pente $C_{z\alpha}$ reste sensiblement la même.

Selon une variante, la pente $C_{z\alpha}$ est déterminée à partir d'une courbe théorique $C_z(\alpha)$.

Selon une autre variante, la pente $C_{z\alpha}$ peut correspondre à une moyenne de pentes de plusieurs courbes théoriques $C_z(\alpha)$ selon différentes positions des becs 10 et des volets 7.

La figure 7 représente des courbes théoriques $C_z(\alpha)$ pour un aéronef AC se présentant selon sept configurations différentes pour lesquelles les volets 7 et les becs 10 sont dans une position. Le système d'estimation 1 peut comprendre un module de détermination DET (DET pour « determining module » en anglais) 8 configuré pour déterminer la ou les courbes théoriques $C_z(\alpha)$. Chacune des courbes théoriques $C_z(\alpha)$ sont déterminée pour une configuration de l'aéronef AC. Les courbes théoriques $C_z(\alpha)$ ainsi déterminées peuvent être stockées dans une mémoire embarquée.

La position des volets et des becs en fonction du levier de commande de configuration dépend du type l'aéronef.

À titre d'exemple, pour un type d'aéronef particulier, les configurations dont les courbes théoriques $C_z(\alpha)$ sont représentées sur la figure 7 présentent les caractéristiques suivantes en ce qui concerne la position des volets et des becs :

- une configuration dite « CONF 0 » dans laquelle les becs sont braqués à 0° et les volets sont braqués à 0°. Cette configuration, qui est également dite « configuration lisse », est notamment utilisée pendant les phases de croisière de l'aéronef,

- une configuration dite « CONF 1 » dans laquelle les becs sont braqués à 18° et les volets sont braqués à 0°,

- une configuration dite « CONF 1+F » dans laquelle les becs sont braqués à 18° et les volets sont braqués à 12°,

- une configuration dite « CONF 2 » dans laquelle les becs sont braqués à 18° et les volets sont braqués à 20°,

- une configuration dite « CONF 3 » dans laquelle les becs sont braqués à 18° et les volets sont braqués à 26°,

- une configuration dite « CONF 3+S » dans laquelle les becs sont braqués à 27° et les volets sont braqués à 26°, et

- une configuration dite « CONF 4 » dans laquelle les becs sont braqués à 27° et les volets sont braqués à 37°.

Chacune des courbes théoriques $C_z(\alpha)$ est définie pour une configuration possible dans laquelle se présente l'aéronef AC. La pente $C_{z\alpha}$ est estimée à partir d'une des courbes théoriques $C_z(\alpha)$ ou à partir de la moyenne des pentes $C_{z\alpha}$ d'au moins deux des courbes théoriques $C_z(\alpha)$.

L'angle d'attaque $\alpha_0$ pour laquelle le coefficient de portance $C_z$ est nul peut être déterminé au point où la courbe théorique $C_z(\alpha)$ coupe l'axe des abscisses. L'angle d'attaque $\alpha_0$ peut donc être déterminé par l'expression

$$\alpha_0 = \alpha - \frac{C_z}{C_{z\alpha}},$$ dans laquelle $\alpha$ correspond à l'angle d'attaque courant mesuré par le module de mesure 2, $C_z$ correspond au coefficient de portance courant estimé par le module d'estimation 3 et $C_{z\alpha}$ correspond à la pente de la partie affine d'au moins une courbe théorique $C_z(\alpha)$ décrivant un coefficient de portance en fonction d'un angle d'attaque.

Le système d'estimation 1 comprend en outre un troisième module d'estimation ESTIM3 5 configuré pour estimer la position courante des volets 7 de l'aéronef AC à partir de l'angle d'attaque $\alpha_0$ pour une portance nulle, estimé par le deuxième module d'estimation 4.

Comme représenté sur la figure 5, l'effet de l'extension des volets 7 est d'accroître le coefficient de portance $C_z$ pour un angle d'attaque donné ou bien, de façon équivalente, de diminuer l'angle d'attaque $\alpha_0$ pour une portance nulle. Sur la courbe théorique $C_z(\alpha)$, l'extension des volets 7 est traduite par une translation de la courbe théorique $C_z(\alpha)$ vers la gauche. L'angle d'attaque $\alpha_0$ pour une portance nulle est donc lié à la position des volets 7.

À partir de la position courante estimée des volets (7) de l'aéronef (AC), la ou les configurations courantes dans laquelle se présente l'aéronef (AC) peuvent être déterminées.

À titre d'exemple, le tableau suivant représente un tableau d'interpolation permettant de déterminer au moins une configuration parmi les configurations dont les courbes théoriques $C_z(\alpha)$ sont représentées sur la figure 7.

| $\alpha_0$ | -1,15° | -5,48° | -6,67° | -8,70° | -10,51° |
|---|---|---|---|---|---|
| Position des volets | 0° | 12° | 20° | 26° | 37° |
| CONF | 0 ou 1 | 1+F | 2 | 3 ou 3+S | 4 |

Le système d'estimation comprend également un module d'envoi SEND (SEND pour « sending module » en anglais) 6 configuré pour envoyer la position courante des volets 7 à un dispositif utilisateur 9.

Le module d'envoi SEND (SEND pour « sending module » en anglais) 6 peut être également configuré pour envoyer la configuration au dispositif utilisateur USER 9.

Selon un mode de réalisation, les modules sont intégrés dans une unité centrale ou un calculateur.

À titre d'exemple, les modules peuvent correspondre à des algorithmes mis en œuvre de façon logicielle dans l'unité centrale.

En particulier, les modules peuvent être stockés dans au moins une zone mémoire de l'unité centrale.

Le procédé d'estimation de la position des volets 7 d'un aéronef AC comprend :

- une étape E2 de mesure, mise en œuvre par le module de mesure 2, consistant à mesurer l'angle d'attaque courant $\alpha$ de l'aéronef AC et des paramètres de vol courants de l'aéronef AC ;
- une étape E3 d'estimation, mise en œuvre par le module d'estimation 3, consistant à estimer le coefficient de portance courant $C_z$ de l'aéronef AC à partir des paramètres de vol courants et de la masse $m$ de l'aéronef AC ;
- une étape E4 d'estimation, mise en œuvre par le module d'estimation 4, consistant à estimer l'angle d'attaque $\alpha_0$ pour une portance nulle à partir de l'angle d'attaque courant $\alpha$, à partir du coefficient de portance courant $C_z$ estimé dans l'étape E3 d'estimation et à partir de la pente $C_{z\alpha}$ d'une partie affine d'au moins une courbe théorique $C_z(\alpha)$ décrivant le coefficient de portance de l'aéronef AC en fonction d'un angle d'attaque ;
- une étape E5 d'estimation, mise en œuvre par le module d'estimation 5, consistant à estimer la position courante des volets 7 de l'aéronef AC à partir de l'angle d'attaque $\alpha_0$ pour une portance nulle, estimé dans l'étape E4 d'estimation ;
- une étape E6 d'envoi, mise en œuvre par le module d'envoi 6, consistant à envoyer la position courante des volets 7 au dispositif utilisateur 9.

L'étape E2 de mesure comprend :

- une sous-étape E21 de mesure, mise en œuvre par le sous-module de mesure 21, consistant à mesurer une composante verticale d'un facteur de charge courant $n_z$ de l'aéronef AC ;
- une sous-étape E22 de mesure, mise en œuvre par le sous-module de mesure 22, consistant à mesurer une

pression statique courante $P_s$ ;
- une sous-étape E23 de mesure, mise en œuvre par le sous-module de mesure 23, consistant à mesurer un nombre de Mach courant $M$ de l'aéronef (AC) ;
- une sous-étape E24 de mesure, mise en œuvre par le sous-module de mesure 24, consistant à mesurer l'angle d'attaque courant $\alpha$ de l'aéronef AC.

L'étape E3 d'estimation consiste à estimer le coefficient de portance courant $C_z$ de l'aéronef AC à partir de l'expression : $C_z = \frac{2 n_z m g}{\gamma P_s M^2 S}$.

Le procédé peut comprendre également une étape E1 de détermination, mise en œuvre par le module de détermination 8, consistant à déterminer la ou les courbes théoriques $C_z(\alpha)$.

L'étape E5 d'estimation consiste également à estimer la ou les configurations courantes dans laquelle se présente l'aéronef AC à partir de la position courante estimée des volets 7 de l'aéronef AC.

**Revendications**

1. Procédé d'estimation d'une position de volets (7) d'un aéronef (AC), ledit procédé comprenant :

   - une étape (E2) de mesure, mise en œuvre par un module de mesure (2), consistant à mesurer un angle d'attaque courant ($\alpha$) de l'aéronef (AC) et des paramètres de vol courants de l'aéronef (AC) ;
   - une première étape (E3) d'estimation, mise en œuvre par un premier module d'estimation (3), consistant à estimer un coefficient de portance courant ($C_z$) de l'aéronef (AC) à partir des paramètres de vol courants et d'une masse ($m$) de l'aéronef (AC) ;

   **caractérisé en ce qu'**il comprend en outre :

   - une deuxième étape (E4) d'estimation, mise en œuvre par un deuxième module d'estimation (4), consistant à estimer un angle d'attaque ($\alpha_0$) pour une portance nulle à partir de l'angle d'attaque courant ($\alpha$), à partir du coefficient de portance courant ($C_z$) estimé dans la première étape (E3) d'estimation et à partir d'une pente ($C_{z\alpha}$) d'une partie affine d'au moins une courbe théorique ($C_z(\alpha)$) décrivant un coefficient de portance de l'aéronef (AC) en fonction d'un angle d'attaque ;
   - une troisième étape (E5) d'estimation, mise en œuvre par un troisième module d'estimation (5), consistant à estimer une position courante des volets (7) de l'aéronef (AC) à partir de l'angle d'attaque ($\alpha_0$) pour une portance nulle, estimé dans la deuxième étape (E4) d'estimation ;
   - une étape (E6) d'envoi, mise en œuvre par un module d'envoi (6), consistant à envoyer la position courante des volets (7) à un dispositif utilisateur (9).

2. Procédé selon la revendication 1,
   **caractérisé en ce que** l'étape (E2) de mesure comprend :

   - une première sous-étape (E21) de mesure, mise en œuvre par un premier sous-module de mesure (21), consistant à mesurer une composante verticale d'un facteur de charge courant ($n_z$) de l'aéronef (AC) ;
   - une deuxième sous-étape (E22) de mesure, mise en œuvre par un deuxième sous-module de mesure (22), consistant à mesurer une pression statique courante ($P_s$) ;
   - une troisième sous-étape (E23) de mesure, mise en œuvre par un troisième sous-module de mesure (23), consistant à mesurer un nombre de Mach courant ($M$) de l'aéronef (AC) ;
   - une quatrième sous-étape (E24) de mesure, mise en œuvre par un quatrième sous-module de mesure (24), consistant à mesurer l'angle d'attaque courant ($\alpha$) de l'aéronef (AC).

3. Procédé selon l'une quelconque des revendications 1 ou 2,
   **caractérisé en ce que** la première étape (E3) d'estimation consiste à estimer le coefficient de portance courant ($C_z$) de l'aéronef (AC) à partir de l'expression suivante : $C_z = \frac{2 n_z m g}{\gamma P_s M^2 S}$, dans laquelle :

   - $n_z$ correspond à la composante verticale d'un facteur de charge courant de l'aéronef (AC),

- $m$ correspond à la masse courante de l'aéronef (AC),
- $g$ correspond à l'accélération de la pesanteur,
- $\gamma$ correspond au coefficient adiabatique pour l'air,
- $P_s$ correspond à la pression statique courante,
- $M$ correspond au nombre de Mach courant de l'aéronef (AC),
- $S$ correspond à une surface de référence d'ailes de l'aéronef (AC).

4. Procédé selon l'une quelconque des revendications 1 à 3,
   **caractérisé en ce que** la pente ($C_{z\alpha}$) utilisée dans la deuxième étape (E4) d'estimation correspond à une moyenne de pentes, chacune des pentes correspondant à une pente de la partie affine de chacune des courbes théoriques ($C_z(\alpha)$) décrivant un coefficient de portance de l'aéronef (AC) en fonction d'un angle d'attaque.

5. Procédé selon l'une quelconque des revendications 1 à 4,
   **caractérisé en ce que** chacune des courbes théoriques ($C_z(\alpha)$) est définie pour une configuration possible dans laquelle se présente l'aéronef (AC).

6. Procédé selon l'une quelconque des revendications 1 à 5,
   **caractérisé en ce qu'**il comprend une étape (E1) de détermination, mise en œuvre par un module de détermination (8), consistant à déterminer la ou les courbes théoriques ($C_z(\alpha)$), chacune des courbes théoriques ($C_z(\alpha)$) étant déterminée pour une configuration de l'aéronef (AC).

7. Procédé selon l'une quelconque des revendications 1 à 6,
   **caractérisé en ce que** la troisième étape (E5) d'estimation consiste également à estimer la ou les configurations courantes dans laquelle se présente l'aéronef (AC) à partir de la position courante estimée des volets (7) de l'aéronef (AC).

8. Système d'estimation d'une position de volets (7) d'un aéronef (AC), ledit système comprenant :

   - un module de mesure (2) configuré pour mesurer un angle d'attaque courant ($\alpha$) de l'aéronef (AC) et des paramètres de vol courants de l'aéronef (AC) ;
   - un premier module d'estimation (3) configuré pour estimer un coefficient de portance courant ($C_z$) de l'aéronef (AC) à partir des paramètres de vol courants et d'une masse ($m$) de l'aéronef (AC) ;

   **caractérisé en ce qu'**il comprend en outre :

   - un deuxième module d'estimation (4) configuré pour estimer un angle d'attaque ($\alpha_0$) pour une portance nulle à partir de l'angle d'attaque courant ($\alpha$), du coefficient de portance courant ($C_z$) estimé par le premier module d'estimation (3) et à partir d'une pente ($C_{z\alpha}$) d'une partie affine d'au moins une courbe théorique ($C_z(\alpha)$) décrivant un coefficient de portance de l'aéronef en fonction d'un angle d'attaque ;
   - un troisième module d'estimation (5) configuré pour estimer une position courante des volets (7) de l'aéronef (AC) à partir de l'angle d'attaque ($\alpha_0$) pour une portance nulle estimé par le deuxième module d'estimation (4) ;
   - un module d'envoi (6) configuré pour envoyer la position courante des volets (7) à un dispositif utilisateur (9).

9. Système selon la revendication 8,
   **caractérisé en ce que** le module de mesure (2) comprend :

   - un premier sous-module de mesure (21) configuré pour mesurer une composante verticale d'un facteur de charge courant ($n_z$) de l'aéronef (AC) ;
   - un deuxième sous-module de mesure (22) configuré pour mesurer une pression statique courante ($P_s$) ;
   - un troisième sous-module de mesure (23) configuré pour mesurer un nombre de Mach courant ($M$) de l'aéronef (AC) ;
   - un quatrième sous-module de mesure (24) configuré pour mesurer l'angle d'attaque courant ($\alpha$) de l'aéronef (AC).

10. Système selon l'une quelconque des revendications 8 ou 9,
    **caractérisé en ce qu'**il comprend un module de détermination (8) configuré pour déterminer la ou les courbes théoriques ($C_z(\alpha)$), chacune des courbes théoriques ($C_z(\alpha)$) étant déterminée pour une configuration de l'aéronef (AC).

**11.** Aéronef,

**caractérisé en ce qu'**il comporte un système d'estimation de la position des volets d'un aéronef, tel que spécifié sous l'une quelconque des revendications 8 à 10.

**Patentansprüche**

**1.** Verfahren zur Schätzung einer Stellung von Klappen (7) eines Luftfahrzeugs (AC), wobei das Verfahren enthält:

- einen von einem Messmodul (2) durchgeführten Messschritt (E2), der darin besteht, einen aktuellen Anstellwinkel ($\alpha$) des Luftfahrzeugs (AC) und aktuelle Flugparameter des Luftfahrzeugs (AC) zu messen;
- einen von einem ersten Schätzmodul (3) durchgeführten ersten Schätzschritt (E3), der darin besteht, einen aktuellen Auftriebskoeffizienten ($C_z$) des Luftfahrzeugs (AC) ausgehend von den aktuellen Flugparametern und einer Masse (m) des Luftfahrzeugs (AC) zu schätzen;

**dadurch gekennzeichnet, dass** es außerdem enthält:

- einen von einem zweiten Schätzmodul (4) durchgeführten zweiten Schätzschritt (E4), der darin besteht, einen Anstellwinkel ($\alpha_0$) für einen Auftrieb Null ausgehend vom aktuellen Anstellwinkel ($\alpha$), ausgehend vom im ersten Schätzschritt (E3) geschätzten aktuellen Auftriebskoeffizienten ($C_z$) und ausgehend von einer Neigung ($C_{z\alpha}$) eines affinen Teils mindestens einer theoretischen Kurve ($C_z(\alpha)$) zu schätzen, die einen Auftriebskoeffizienten des Luftfahrzeugs (AC) abhängig von einem Anstellwinkel beschreibt;
- einen von einem dritten Schätzmodul (5) durchgeführten dritten Schätzschritt (E5), der darin besteht, eine aktuelle Stellung der Klappen (7) des Luftfahrzeugs (AC) ausgehend vom im zweiten Schätzschritt (E4) geschätzten Anstellwinkel ($\alpha_0$) für einen Auftrieb Null zu schätzen;
- einen von einem Sendemodul (6) durchgeführten Sendeschritt (E6), der darin besteht, die aktuelle Stellung der Klappen (7) an eine Benutzervorrichtung (9) zu senden.

**2.** Verfahren nach Anspruch 1, **dadurch gekennzeichnet, dass** der Messschritt (E2) enthält:

- einen von einem ersten Mess-Teilmodul (21) durchgeführten ersten Mess-Teilschritt (E21), der darin besteht, eine senkrechte Komponente eines aktuellen Lastfaktors ($n_z$) des Luftfahrzeugs (AC) zu messen;
- einen von einem zweiten Mess-Teilmodul (22) durchgeführten zweiten Mess-Teilschritt (E22), der darin besteht, einen aktuellen statischen Druck ($P_s$) zu messen;
- einen von einem dritten Mess-Teilmodul (23) durchgeführten dritten Mess-Teilschritt (E23), der darin besteht, eine aktuelle Machzahl (M) des Luftfahrzeugs (AC) zu messen;
- einen von einem vierten Mess-Teilmodul (24) durchgeführten vierten Mess-Teilschritt (E24), der darin besteht, den aktuellen Anstellwinkel ($\alpha$) des Luftfahrzeugs (AC) zu messen.

**3.** Verfahren nach einem der Ansprüche 1 oder 2, **dadurch gekennzeichnet, dass** der erste Schätzschritt (E3) darin besteht, den aktuellen Auftriebskoeffizienten ($C_z$) des Luftfahrzeugs (AC) ausgehend von folgendem Ausdruck zu messen:

$$C_z = \frac{2 n_z mg}{\gamma P_s M^2 S'}$$

wobei:

- $n_z$ der senkrechten Komponente eines aktuellen Lastfaktors des Luftfahrzeugs (AC) entspricht,
- m der aktuellen Masse des Luftfahrzeugs (AC) entspricht,
- g der Schwerkraftbeschleunigung entspricht,
- $\gamma$ dem adiabatischen Koeffizienten für die Luft entspricht,
- $P_s$ dem aktuellen statischen Druck entspricht,
- M der aktuellen Machzahl des Luftfahrzeugs (AC) entspricht,
- S einer Bezugsfläche von Flügeln des Luftfahrzeugs (AC) entspricht.

**4.** Verfahren nach einem der Ansprüche 1 bis 3, **dadurch gekennzeichnet, dass** die im zweiten Schätzschritt (E4)

verwendete Neigung ($C_{z\alpha}$) einem Mittelwert von Neigungen entspricht, wobei jede der Neigungen einer Neigung des affinen Teils jeder der theoretischen Kurven ($C_z(\alpha)$) entspricht, die einen Auftriebskoeffizienten des Luftfahrzeugs (AC) abhängig von einem Anstellwinkel beschreibt.

**5.** Verfahren nach einem der Ansprüche 1 bis 4, **dadurch gekennzeichnet, dass** jede der theoretischen Kurven ($C_z(\alpha)$) für eine mögliche Konfiguration definiert wird, in der sich das Luftfahrzeug (AC) darbietet.

**6.** Verfahren nach einem der Ansprüche 1 bis 5, **dadurch gekennzeichnet, dass** es einen von einem Bestimmungsmodul (8) durchgeführten Bestimmungsschritt (E1) enthält, der darin besteht, die theoretische (n) Kurve (n) ($C_z(\alpha)$) zu bestimmen, wobei jede der theoretischen Kurven ($C_z(\alpha)$) für eine Konfiguration des Luftfahrzeugs (AC) bestimmt wird.

**7.** Verfahren nach einem der Ansprüche 1 bis 6, **dadurch gekennzeichnet, dass** der dritte Schätzschritt (E5) ebenfalls darin besteht, die aktuelle(n) Konfiguration(en) zu schätzen, in der(denen) sich das Luftfahrzeug (AC) darbietet, ausgehend von der geschätzten aktuellen Stellung der Klappen (7) des Luftfahrzeugs (AC).

**8.** System zur Schätzung einer Stellung von Klappen (7) eines Luftfahrzeugs (AC), wobei das System enthält:

- ein Messmodul (2), das konfiguriert ist, einen aktuellen Anstellwinkel ($\alpha$) des Luftfahrzeugs (AC) und aktuelle Flugparameter des Luftfahrzeugs (AC) zu messen;
- ein erstes Schätzmodul (3), das konfiguriert ist, einen aktuellen Auftriebskoeffizient ($C_z$) des Luftfahrzeugs (AC) ausgehend von den aktuellen Flugparametern und einer Masse (m) des Luftfahrzeugs (AC) zu schätzen;

**dadurch gekennzeichnet, dass** es außerdem enthält:

- ein zweites Schätzmodul (4), das konfiguriert ist, einen Anstellwinkel ($\alpha_0$) für einen Auftrieb Null ausgehend vom aktuellen Anstellwinkel ($\alpha$), von dem vom ersten Schätzmodul (3) geschätzten aktuellen Auftriebskoeffizienten ($C_z$) und ausgehend von einer Neigung ($C_{z\alpha}$) eines affinen Teils mindestens einer theoretischen Kurve ($C_z(\alpha)$) zu schätzen, die einen Auftriebskoeffizienten des Luftfahrzeugs abhängig von einem Anstellwinkel beschreibt;
- ein drittes Schätzmodul (5), das konfiguriert ist, eine aktuelle Stellung der Klappen (7) des Luftfahrzeugs (AC) ausgehend vom Anstellwinkel ($\alpha_0$) für einen vom zweiten Schätzmodul (4) geschätzten Auftrieb Null zu schätzen;
- ein Sendemodul (6), das konfiguriert ist, die aktuelle Stellung der Klappen (7) an eine Benutzervorrichtung (9) zu senden.

**9.** System nach Anspruch 8, **dadurch gekennzeichnet, dass** das Messmodul (2) enthält:

- ein erstes Mess-Teilmodul (21), das konfiguriert ist, eine senkrechte Komponente eines aktuellen Lastfaktors ($n_z$) des Luftfahrzeugs (AC) zu messen;
- ein zweites Mess-Teilmodul (22), das konfiguriert ist, einen aktuellen statischen Druck ($P_s$) zu messen;
- ein drittes Mess-Teilmodul (23), das konfiguriert ist, eine aktuelle Machzahl (M) des Luftfahrzeugs (AC) zu messen;
- ein viertes Mess-Teilmodul (24), das konfiguriert ist, den aktuellen Anstellwinkel ($\alpha$) des Luftfahrzeugs (AC) zu messen.

**10.** System nach einem der Ansprüche 8 oder 9, **dadurch gekennzeichnet, dass** es ein Bestimmungsmodul (8) enthält, das konfiguriert ist, die theoretische(n) Kurve (n) ($C_z(\alpha)$) zu bestimmen, wobei jede der theoretischen Kurven ($C_z(\alpha)$) für eine Konfiguration des Luftfahrzeugs (AC) bestimmt wird.

**11.** Luftfahrzeug, **dadurch gekennzeichnet, dass** es ein Schätzsystem der Stellung der Klappen eines Luftfahrzeugs wie in einem der Ansprüche 8 bis 10 angegeben aufweist.

**Claims**

**1.** Method for estimating a position of flaps (7) of an aircraft (AC),
said method comprising:

- a measurement step (E2), implemented by a measuring module (2), consisting in measuring a current angle of attack ($\alpha$) of the aircraft (AC) and current flight parameters of the aircraft (AC);
- a first estimation step (E3), implemented by a first estimating module (3), consisting in estimating a current lift coefficient ($C_z$) of the aircraft (AC) from the current flight parameters and from a mass ($m$) of the aircraft (AC) ;

**characterized in that** it further comprises:

- a second estimation step (E4), implemented by a second estimating module (4), consisting in estimating an angle of attack ($\alpha_0$) for a zero lift from the current angle of attack ($\alpha$), from the current lift coefficient ($C_z$) estimated in the first estimation step (E3) and from a slope ($C_{z\alpha}$) of an affine part of at least one theoretical curve ($C_z(\alpha)$) describing a lift coefficient of the aircraft (AC) as a function of an angle of attack;
- a third estimation step (E5), implemented by a third estimating module (5), consisting in estimating a current position of the flaps (7) of the aircraft (AC) from the angle of attack ($\alpha_0$) for a zero lift, estimated in the second estimation step (E4);
- a sending step (E6), implemented by a sending module (6), consisting in sending the current position of the flaps (7) to a user device (9).

2. Method according to Claim 1,
   **characterized in that** the measurement step (E2) comprises:

   - a first measurement substep (E21), implemented by a first measuring submodule (21), consisting in measuring a vertical component of a current load factor ($n_z$) of the aircraft (AC);
   - a second measurement substep (E22), implemented by a second measuring submodule (22), consisting in measuring a current static pressure ($P_s$) ;
   - a third measurement substep (E23), implemented by a third measuring submodule (23), consisting in measuring a current Mach number ($M$) of the aircraft (AC);
   - a fourth measurement substep (E24), implemented by a fourth measuring submodule (24), consisting in measuring the current angle of attack ($\alpha$) of the aircraft (AC) .

3. Method according to either one of Claims 1 and 2,
   **characterized in that** the first estimation step (E3) consists in estimating the current lift coefficient ($C_z$) of the aircraft (AC) from the following expression:

$$C_z = \frac{2n_z mg}{\gamma P_s M^2 S},$$

in which:

- $n_z$ corresponds to the vertical component of a current load factor of the aircraft (AC),
- $m$ corresponds to the current mass of the aircraft (AC),
- $g$ corresponds to the acceleration of gravity,
- $\gamma$ corresponds to the adiabatic coefficient for air,
- $P_s$ corresponds to the current static pressure,
- $M$ corresponds to the current Mach number of the aircraft (AC),
- $S$ corresponds to a reference surface of wings of the aircraft (AC).

4. Method according to any one of Claims 1 to 3,
   **characterized in that** the slope ($C_{z\alpha}$) used in the second estimation step (E4) corresponds to an average of slopes, each of the slopes corresponding to a slope of the affine part of each of the theoretical curves ($C_z(\alpha)$) describing a lift coefficient of the aircraft (AC) as a function of an angle of attack.

5. Method according to any one of Claims 1 to 4,
   **characterized in that** each of the theoretical curves ($C_z(\alpha)$) is defined for a possible configuration of the aircraft (AC).

6. Method according to any one of Claims 1 to 5,
   **characterized in that** it comprises a determination step (E1), implemented by a determination module (8), consisting in determining the theoretical curve or curves ($C_z(\alpha)$), each of the theoretical curves ($C_z(\alpha)$) being determined for a configuration of the aircraft (AC).

7. Method according to any one of Claims 1 to 6,
**characterized in that** the third estimation step (E5) consists also in estimating the current configuration or configurations of the aircraft (AC) from the estimated current position of the flaps (7) of the aircraft (AC).

8. System for estimating a position of flaps (7) of an aircraft (AC),
said system comprising:

- a measuring module (2) configured to measure a current angle of attack ($\alpha$) of the aircraft (AC) and current flight parameters of the aircraft (AC);
- a first estimating module (3) configured to estimate a current lift coefficient ($C_z$) of the aircraft (AC) from the current flight parameters and from a mass ($m$) of the aircraft (AC);

**characterized in that** it further comprises:

- a second estimating module (4) configured to estimate an angle of attack ($\alpha_0$) for a zero lift from the current angle of attack ($\alpha$), from the current lift coefficient ($C_z$) estimated by the first estimating module (3) and from a slope ($C_{z\alpha}$) of an affine part of at least one theoretical curve ($C_z(\alpha)$) describing a lift coefficient of the aircraft as a function of an angle of attack;
- a third estimating module (5) configured to estimate a current position of the flaps (7) of the aircraft (AC) from the angle of attack ($\alpha_0$) for a zero lift estimated by the second estimating module (4);
- a sending module (6) configured to send the current position of the flaps (7) to a user device (9).

9. System according to Claim 8,
**characterized in that** the measuring module (2) comprises:

- a first measuring submodule (21) configured to measure a vertical component of a current load factor ($n_z$) of the aircraft (AC);
- a second measuring submodule (22) configured to measure a current static pressure ($P_s$) ;
- a third measuring submodule (23) configured to measure a current Mach number ($M$) of the aircraft (AC) ;
- a fourth measuring submodule (24) configured to measure the current angle of attack ($\alpha$) of the aircraft (AC).

10. System according to either one of Claims 8 and 9,
**characterized in that** it comprises a determination module (8) configured to determine the theoretical curve or curves ($C_z(\alpha)$), each of the theoretical curves ($C_z(\alpha)$) being determined for a configuration of the aircraft (AC).

11. Aircraft,
**characterized in that** it comprises a system for estimating the position of the flaps of an aircraft, as specified under any one of Claims 8 to 10.

Fig. 1

Fig. 2

Fig. 3

Fig. 4

Fig. 5

Fig. 6

Fig. 7

**RÉFÉRENCES CITÉES DANS LA DESCRIPTION**

**Documents brevets cités dans la description**

- US 6073084 A